# EUROPEAN PATENT APPLICATION

(11) **EP 2 490 087 A1**
(43) Date of publication of application: **22.08.2012**
(21) Application number: 11155098.4
(22) Date of filing: 18.02.2011
(51) Int. Cl.: G05B 19/042, G05B 19/418, G05B 23/02, G01D 4/00

(54) **Energy consumption monitor**

(71) Applicant: Utilivista Limited, Uckfield TN22 5HJ (GB)
(72) Inventor: Daubney, Stuart, Market Rasen, LN7 6PS (GB)
(74) Representative: Jackson, Nicholas Andrew

(57) **Abstract**

The apparatus and method of the present invention provides accurate consumption and efficiency data for a given system by taking into account many of the external factors described. The apparatus receives inputs from a number of different sources including environmental sensors, utility meters and other device sensors. The input data are transmitted to a central base-station that communicates the data to a remote server. The server uses the sensor data and calculates system performance values, for example energy consumption and cost, and compares these to a number of preset values, for example user defined targets or 'Best-ln-Class' performance. The data are then available to a user online via a secure web-based interface.

## Description

### BACKGROUND

### a. Field of the Invention

This invention relates to a method and apparatus for monitoring energy consumption and in particular a method and apparatus for monitoring utility costs and emissions.

### b. Related Art

Recently there has been an increased drive towards more comprehensive monitoring of energy consumption. This want and need is fuelled by the increasing concerns over climate change and rising energy costs.

Smart meters are advanced utility meters that, in general, take meter readings at predetermined intervals and transmit this data to a utility company for monitoring and billing purposes. However, these systems have a number of disadvantages. Firstly, a new or replacement meter is generally required that contains the necessary sensors and transmission equipment. Secondly, the system typically only relays meter readings, and insufficient data capture and inadequate data processing does not allow for intelligent use of the data to monitor efficiency and emissions and identify potential savings or improvements that may be made to the system.

There is a need for a system that does more than just show a user their current energy consumption, but can also be used to identify potential savings that may be made through specific changes to hardware and the surrounding environment to improve energy consumption.

### SUMMARY OF THE INVENTION

According to a first aspect of the present invention there is provided device performance monitoring apparatus for monitoring the performance of a device comprising:
performance measuring means for measuring actual performance data of the device;
parameter measuring means for measuring parameters influencing the performance of the device;
transmitting means for transmitting data from the performance measuring means and the parameter measuring means to a processor;
wherein the processor calculates the actual performance of the device and compares the actual performance data to optimal performance data based on the data obtained from the parameter measuring means.

The performance data may comprise the fuel consumption of the device.

The performance data may comprise the economic consumption (or cost) of the device.

The performance data may comprise the CO₂ emissions of the device.

The optimal performance data may comprise the optimal performance data for the specific device operating in the specific environment.

The optimal performance data may comprise the optimal performance data for the type of device operating in the specific environment.

Preferably the parameter measuring means comprises load measuring means for measuring the load on the device.

The load measuring means may measure and record the production rate of the device.

The load measuring means may measure and record the heating and/or cooling requirements of the device.

Preferably the apparatus comprises display means to display the actual performance of the device in comparison with the optimal performance for the device.

Preferably the display means is arranged to display actual performance characteristics of the device in comparison with the performance characteristics of a second device.

Preferably the display means is arranged to display actual performance characteristics of the device in comparison with the device operating with different parameters. For example, the display means may display the actual performance characteristics of the device with the device operating at a different load or at a different temperature/humidity/light level/wind speed etc.

Preferably the device comprises display means to display the actual performance of the device in comparison with the performance of a second device wherein the performance of the second device is calculated from a database using the data recorded from the parameter measuring means. Preferably the second device is a best in class device.

Preferably the device comprises display means to display the actual performance of the device in comparison with the performance of the same device under design conditions, for example, the performance of the device upon installation as a brand new device.

Preferably the parameter measuring means measures environmental factors which may influence the performance of the device.

Preferably the performance measuring means measures the actual energy consumption of the device.

The performance measuring means may measure the actual electrical consumption of the device.

The performance measuring means may measure the actual gas consumption of the device.

The performance measuring means may measure the fuel consumption of the device.

The performance measuring means may measure the water consumption of the device.

The performance measuring means may measure the effluent produced by the device.

The parameter measuring means may comprise at least one sensor. The parameter measuring means may comprise a plurality of sensors.

The parameter measuring means may comprise at least one environmental sensor.

The parameter measuring means may comprise a temperature sensor which may sense and record the temperature of the environment around the device. The parameter measuring means may comprise a light sensor. The parameter measuring means may comprise a humidity sensor. The parameter measuring means may comprise a wind speed sensor.

The parameter measuring means may comprise a sensor to sense the configuration of an enclosure in which the device is located. For example, the parameter measuring means may comprise sensors to detect whether windows and doors are open or closed in a building.

The display means may display and compare cost data.

The display means may display and compare CO₂ emission data.

The display means may display and compare consumption data.

The display means may comprise internet based display means.

The display means may display data on the internet.

The display means may display the data on a web page.

The transmitting means may be arranged to periodically transmit the data to the processor.

The transmitting means may comprise wireless data transmitting means.

The device may comprise a chiller.

The device may comprise a heating device, an air conditioner device, a lighting device, a production machine device, a building device, a cooling system device, a boiler, a motor, a heat exchanger, or another utility consumption device.

According to a second aspect of the present invention there is provided a device performance monitoring method for monitoring the performance of a device comprising:
measuring and recording data for the actual performance of the device;
measuring and recording parameter data influencing the performance of the device;
transmitting data from parameter measuring means and performance measuring means to a processor;
comparing the actual performance data of the device to optimal performance data.

The method may comprise measuring load parameters influencing the performance of the device.

The method may comprise measuring environmental parameters influencing the performance of the device.

The method may comprise measuring building or process parameters influencing the performance of the device.

The method may comprise measuring operating profile parameters of the device.

### BRIEF DESCRIPTION OF THE DRAWINGS

The invention will now be further described, by way of example only, and with reference to the accompanying drawings, in which:
Figure 1 is a schematic diagram of a first embodiment of the apparatus of the present invention;
Figure 2 is a flow diagram showing the steps in an embodiment of a method according to the present invention;
Figure 3 is a schematic of the apparatus of another embodiment of the apparatus of the present invention;
Figure 4a shows an example of part of a summary web-page displaying consumption and cost data;
Figure 4b shows an example of part of a web-page displaying information comparing actual costs with user defined targets; and
Figure 4c shows an example of part of a web-page displaying a trend graph plotting monthly cost associated with an electricity meter plotted with the monthly budget for this meter.
Figure 4d shows an example of part of a web-page displaying the costs of running a cooling system and chiller compared with optimal and Best in Class data.
Figure 4e shows the data of Figure 4d expanded to give a more detailed breakdown of the costs associated with different components.
Figure 5 is an alternative flow diagram showing the steps in an embodiment of a method according to the present invention.

### DETAILED DESCRIPTION

High energy costs, new legislative requirements and an unprecedented concern about climate change provide powerful incentives to closely monitor energy consumption and associated carbon dioxide emissions.

For every system (from large integrated systems such as buildings to individual items such as a motor or lighting circuit) there will be an optimal utility consumption at any given time. The word 'optimal' implies that it cannot be improved upon and the difference between this and the actual consumption highlights the magnitude of the opportunity for improvement.

The concept of 'optimal' can be applied at two levels; firstly in relation to the existing equipment on site and secondly in relation to what is available in the market place as the latest, most energy-efficient devices, which is often termed 'Best-In-Class'. Comparing the actual cost of operation with these two perspectives provides accurate Return on Investment (ROI) type information enabling confident decision-making on the most cost-effective way forward whether through improved and better targeted maintenance activities, upgrades or the partial/complete replacement of systems.

Furthermore, for many systems, optimal consumption is constantly changing in response to fluctuating environmental (e.g. temperature, light, humidity) and load (e.g. production rate, heating/cooling requirements) conditions, and therefore, it is important that these factors are taken into account when calculating system efficiencies.

Once again, the concept of efficiency operates at different levels. Efficiency may be calculated for a device or unit in isolation, or the efficiency calculation may take into account these additional external factors. For example, the efficiency of a chiller unit may be high when taken in isolation, however, if the chiller unit is being used to cool a room in which the heating system is also on, then the efficiency at this level is reduced, and energy consumption is likely to be excessive when considering the entire region of interest, in this case the room. Without a full appreciation of how efficiency is being evaluated it is possible to draw the wrong conclusions on the performance of component parts or devices.

The apparatus and method of the present invention, therefore, provides more accurate consumption and efficiency data for a given system by taking into account many of the external factors described. The apparatus receives inputs from a number of different sources including environmental sensors, utility meters and other device sensors. The input data are transmitted to a central base-station that communicates the data to a remote server. The server uses the sensor data and calculates system performance values, for example energy consumption and cost, and compares these to a number of preset values, for example user defined targets or 'Best-In-Class' performance. The data are then available to a user online via a secure web-based interface.

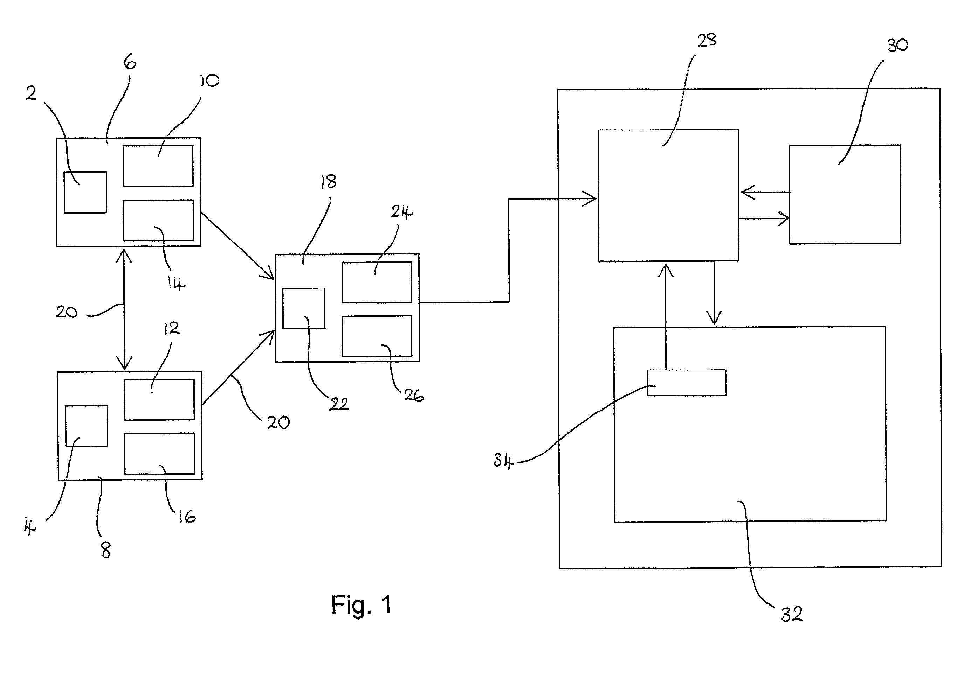

Figure 1 is a schematic showing a first embodiment of the apparatus for monitoring energy consumption. A first sensor 2 is attached to a utility meter (not shown), in this example an electricity meter in a system which includes only an electric heater (not shown). A second sensor 4 is a temperature sensor, arranged to measure the temperature in the room in which the heater is located. The first and second sensors 2, 4 are contained within or connected to first and second sensor modules 6, 8. Each of these sensor modules 6, 8 comprises a memory 10, 12 and a transceiver 14, 16. The sensors 2, 4 and sensor modules 6, 8 are arranged so that the sensors 2, 4 make the required measurement, in this example a meter reading and a temperature measurement, at preset time intervals. These measurements may then be stored in the memory 10, 12 of the sensor module 6, 8. Once a number of measurements have been collected, the transceiver 14, 16 in the module 6, 8 transmits the measurement data, as a packet of data, to a base-station module 18. The ability to store a number of measurements in the memory 10, 12 for a period of time allows the transceiver 14, 16 to transmit data less frequently than it is collected by the sensor 2, 4. This has two related advantages, firstly, the sensor 2, 4 can take measurements at very short time intervals, for example every minute, and secondly, the transceiver 14, 16 can transmit the data less frequently, for example every 10 or 30 minutes, which reduces the power consumption of the sensor module 6, 8.

The sensor modules 6, 8 and base-station module 18 are linked by a wireless network 20. In this way, the packets of data may be transmitted directly from a sensor module 6, 8 to a base-station module 18, or may be transmitted by a first sensor module 6 to the base-station module 18 via a second sensor module 8.

The base-station module 18 includes a receiver 22 for receiving data from the sensor module network, a memory 24 and means 26 for transmitting the data to a remote server 28. In a similar way to the memory 10, 12 in the sensor modules 6, 8, the memory 24 in the base-station module 18 allows data received by the base-station 18 to be stored for a period of time before it is uploaded to the remote server 28. The remote server 28 comprises a processor for processing the data received from the base-station module 18.

The processor is programmed to perform a number of different consumption and comparison calculations. The data from the utility meter is used to calculate the consumption rate of the electricity. In addition, the temperature measurements can be used to determine the environmental conditions and the load on the heater. For example, if the heater was required to heat a room to 20°C but the temperature of the room was measured to be only 5 °C then there would be a greater load on the heater than if the temperature of the room was measured to be 15°C. This load rating can then be used to calculate a more accurate value for the efficiency of the heater than simply measuring the consumption of electricity alone. The load rating would be used by the server in one or more equations to calculate what the consumption would have been if the heater was 100% efficient (called "optimal"), or if a different heater had been installed instead of the current one, specifically the "Best-In-Class". All the results of the calculations are converted from consumption data into cost data and also into CO₂ emission data.

So far, the apparatus and method for monitoring energy consumption has been described in terms of a very simple system containing only one device (heater) and one external environmental factor (temperature). Clearly, the system may be expanded to incorporate many different sensors connected to different utilities, different devices and/or different regions of interest.

In other embodiments a number of sensors may be connected to specific components of a device. These sensors may measure properties such as temperatures, pressures, flow rates or the run time of key components. For example, sensors may be placed in a chiller to monitor the flow rate of the water and the temperatures at the inlet and outlet of the evaporator or heat exchanger. This data may, therefore, be used to give more accurate information about specific devices or components.

Additional data used for the calculations, apart from the data from the device and environmental sensors, may be retrieved from a storage space, which may be part of a second server 30. This additional data may include external reference values, for example utility tariffs, conversion factors, benchmark values, historical data, and data for optimal and best-in-class consumption. These external reference values therefore may include site specific data as well as data common to other sites. These external reference values therefore allow the system to calculate the cost of the electricity being consumed, or the CO₂ emissions generated by the consumption of that electricity. Furthermore, comparisons can be made with the likely consumption and efficiency of other units or devices if they were to be installed in place of the existing heater, for example.

In this example, the remote server 28 is connected to the Internet, and the calculated data is displayed on a web page 32 allowing a user of the system to view the data from any location. The information may be displayed in a number of ways, for example, a summary table may show current consumption and cost values, or a bar or line chart may show CO₂ emissions as monthly or yearly trends. A graphic display may indicate if efficiency improvements could be made by more frequent maintenance of the heater or if cost savings could be made by replacing the heater with a different unit.

In addition, the web page 32 or associated web pages permit user defined budgets or targets to be entered. The server processor can then retrieve these user inputs 34 and calculate differences between actual consumption and user targets. The manner in which this data is displayed will be discussed in more detail later.

Furthermore, in a preferred embodiment, both the supplier and the user of the invention would be able to view, modify or add to the external reference values, although there may be certain restrictions imposed on the user. Preferably these changes are made by means of a spreadsheet style interface in the web page.

The combination of device and environmental sensors, external reference values and user defined targets means that the system is able to display more meaningful data rather than simply reporting cost and consumption of utilities for a particular device or region of interest (room, building, site etc). The system compares actual costs/consumption with what the device or region of interest would be consuming under both optimal conditions, that is the design conditions or as per day one after installation, and alternative conditions, for example if a device was replaced with the latest, most energy efficient alternative (Best In Class). This facilitates Return on Investment calculations to be undertaken on the cost benefit of maintenance and replacement, respectively. In addition, the user is provided with the associated potential savings in CO₂.

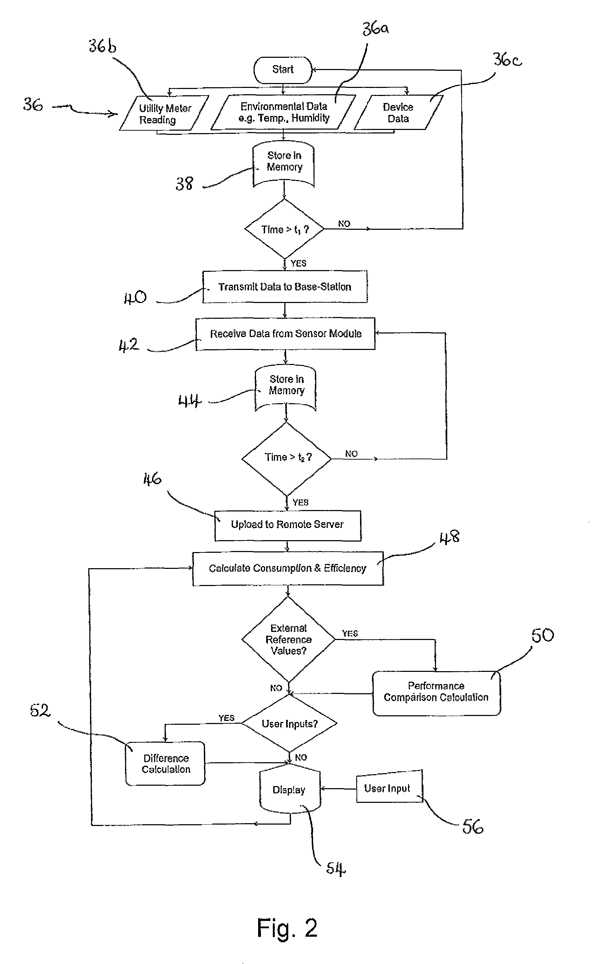

Figure 2 is a flow chart illustrating the key steps of an embodiment of an energy consumption monitoring method as it may be applied to many situations. The first step 36 is to collect the required data from different sensors. These sensors may be measuring environmental factors 36a such as temperature or humidity, recording readings from utility meters 36b, or collecting data from devices 36c such as heaters, air-conditioning systems, lighting and/or machinery. This final device data 36c, may take the form of operating profiles or process characteristics, for example a machine may be programmed to perform and repeat a set number of processes each drawing a different quantity of power.

The sensors collect data at frequent intervals and this is stored 38 in the memory of the sensor module. After a certain period of time, t₁, which is greater than the time interval between sensor measurements, a transmitter in the sensor module transmits 40 the packet of data from the memory to a base-station module. Once the data has been received 42 by the base-station, the data is then stored 44 in the memory of the base-station module for a further period of time, t₂, where t₂ is greater than t₁. After a time interval t₂, the data stored in the base-station module memory is uploaded 46 to a remote server. Typically this upload will occur via an Internet connection.

The data is then processed 48 by the remote server to calculate consumption (actual and 'optimal') and efficiency data. If external reference values are available then these will be used to calculate additional performance indicators 50, including comparisons with the predicted energy consumption of other devices available on the market, as well as cost and CO₂ emission estimates. The external reference values may be stored in the memory of the remote server or may be retrieved from one or more additional servers or from a database. The external reference values may be retrieved from a web server.

The server then checks for any user inputs such as energy consumption or emission targets or budget limits. If user inputs exist then the server calculates 52 any differences between the actual consumption, emission or cost values and the user input values.

Finally, the outputs from the calculations are displayed 54 on suitable display means which will typically be a web page. The user will be able to access this web page, typically via a secure login, to view the data and enter 56 or change any user defined variables or targets they require.

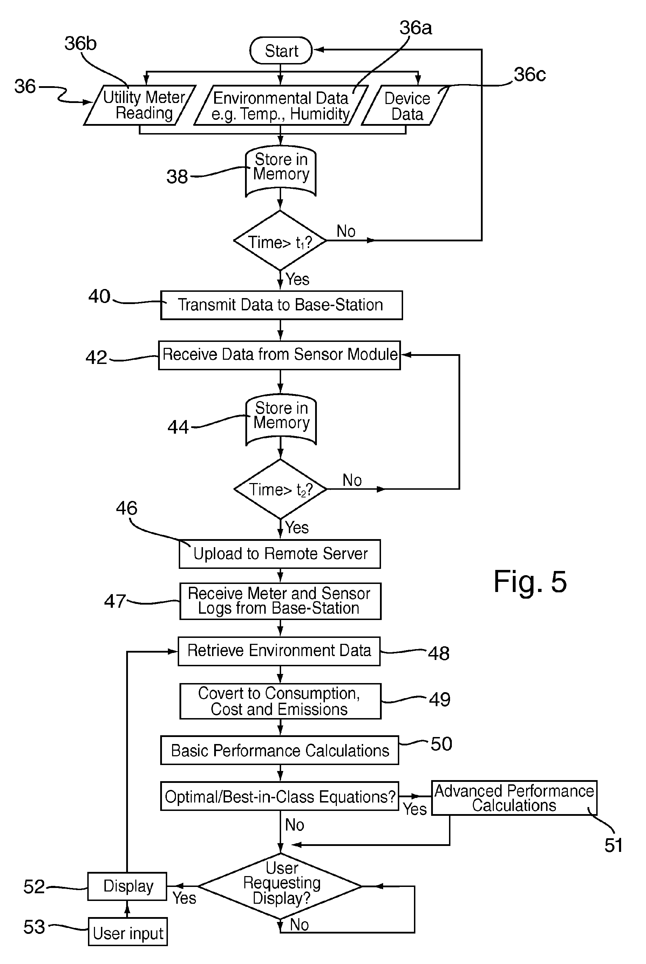

This may also be explained with reference to Figure 5. The remote server receives data relating to meter and sensor activity 47, retrieves the environment data (parameter data) for the relevant site 48, including utility tariffs, conversion factors, benchmark values, historical data, and data for budgets, targets, optimal and best-in-class consumption. The environment data may be either stored on a database residing on the remote server itself, or be retrieved from one or more additional servers. The remote server uses this data first of all to convert from raw data about meter activity into consumption, cost and co2 emission data 49. It then uses the environment data to perform basic performance calculations 50, including comparison with budgets and targets for each meter, comparison between the different meters and utilities, and benchmarking. If the environment data includes equations for optimal or best-in-class consumption, the remote server then performs advanced performance calculations 51, i.e. comparison between actual performance and optimal and / or best-in-class performance.

After these calculations the remote server is ready to display all the results of these calculations to the user 52, as soon as there is a request to do so. This display will typically be through the internet, via secure login. As well as viewing data the user can also use the display interface to change the environment data, or even add or change data relating to meter or sensor activity 53. Input from the user may result in calculations having to be redone by the remote server.

In a preferred embodiment, user input 53 will be by means of a spreadsheet style interface. The provider of the invention will also have access to the user input interface. The spreadsheet form is especially suitable for entering equations for calculating optimal and best-in-class consumption.

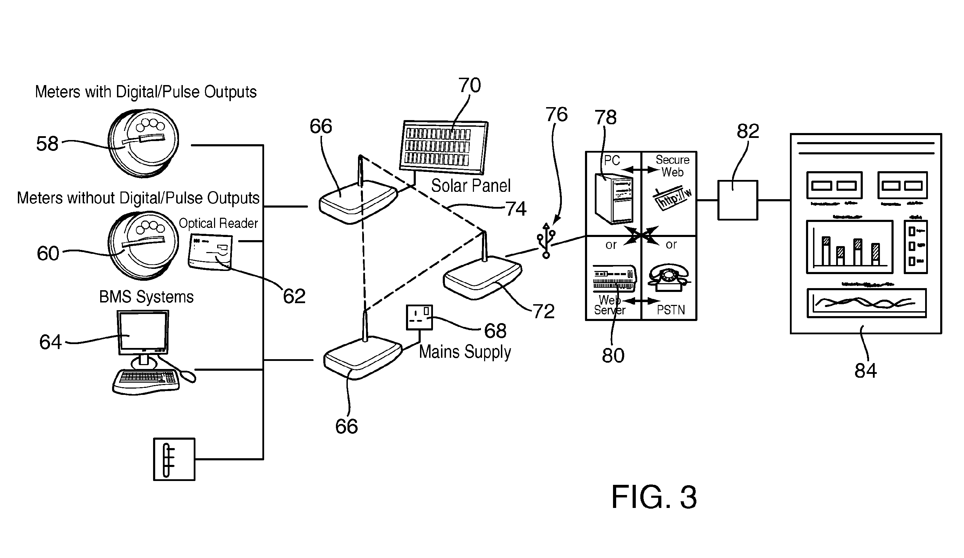

Installation of the apparatus of the present invention in larger premises, for example factories, offices or similar, will inevitably lead to a requirement for a large number of sensor modules sensing a multitude of different conditions and equipment. It is therefore desirable that the sensors are able to capture or receive a wide variety of digital and/or analogue signals. This is depicted in Figure 3.

Utility meters alone will be of varying types and age and will have different outputs. Whilst most meters 58 provide a digital signal per unit consumption which may be monitored easily by a sensor, older meters 60 may not have this facility. In this case, an optical reader 62 may be installed in the system to 'read' the meter 60 and convert this reading into a suitable signal to be sent to the sensor module 66. This has the advantage that data may be captured from a wide variety of meters without requiring meter replacement.

Additional data may be retrieved from an existing Building Management System (BMS) 64. These are computer based control systems installed in buildings that control and monitor the building's mechanical and electrical equipment such as air handling and cooling plant systems, lighting, power systems, fire systems, and security systems. Retrieved data from these management systems 64 can be used for monitoring and targeting purposes.

When locating some sensor modules 66, it may be possible to connect a number of sensors to a single module. It is therefore desirable for each sensor module 66 to have a number of input ports enabling connection to a number of different sensors. In a preferred embodiment digital and/or analogue inputs from externally connected sensors are fed to 1 Analogue and 3 Universal Inputs via a RJ45 connector.

Data from the sensors are stored in memory in the sensor module 66 and may be stored in a microprocessor. For example, data may be stored on a Texas Instruments ^{RTM} microprocessor, MSP430F1611. In a preferred embodiment data are stored on an Atmel ^{RTM} ATmega1281V microcontroller.

The costs of running power and communication cables to and from the sensors and sensor modules 66 can be very significant and, therefore, it is desirable that the sensor modules 66 are battery powered, wireless devices.

Management of power consumption is clearly a critical factor with battery operated equipment; ensuring batteries do not have to be replaced too frequently. Continuous data capture can be achieved with very low power consumption, whereas wireless transmission of that data will consume orders of magnitude more power. Consequently the demand for updates approaching real-time information has to be balanced with battery life, which in turn is dependent on the frequency of transmission, the output power of the wireless transceiver (which dictates the range of transmission), and so on. It is therefore desirable if the sensor modules are able to store data collected by the sensors for at least 24 hours. This enables continuous or very frequent data capture to occur, with less frequent transmission. Operating at lower transmission frequencies will also increase the transmission range for a given power output, particularly through building structures, although one has to be careful to avoid interference associated with competing transmissions.

In one embodiment, the sensor modules 66 are powered by 2 x AA lithium batteries (L91 - each 1.5v; 2900 mAh). For the higher power demands, particularly when a module is being used as a base-station module, the module can be powered externally via a USB charger. Given that the L91 lithium batteries cannot be recharged, the battery circuit will be isolated when operated on mains power 68. In other embodiments, and in situations where there is a higher power requirement and no mains power availability, there is the option of powering the module 66 with NiMh batteries in conjunction with a suitable solar panel 70.

Captured data is transmitted from the sensor modules 66 to a base-station module 72 or dedicated web server or web-enabled device. Data transmission may occur via communication cables, however, in preferred embodiments, the data transmission 74 is wireless. In general, wireless networks 74 have the advantage that the installation is relatively fast and low cost.

Wireless networks 74 can be arranged in mesh systems which can be very reliable and resilient, as each node needs only transmit as far as the next node. Nodes act as routers to transmit data from nearby nodes to peers that are too far away to reach in a single hop, resulting in a network that can span larger distances. The topology of a mesh network is also more reliable, as each node is connected to several other nodes. If one node drops out of the network, due to hardware failure or any other reason, its neighbours can find another route using a routing protocol.

It is desirable if the wireless network 74 is low cost and has low power consumption, enabling a few years of operation between battery changes. Additionally, the network should have the ability to function across industrial environments without the transmission frequencies interfering with any other control systems. Ideally, the sensor modules 66 should be of a small size to enable them to be positioned easily and not interfere with the operation of equipment, and there is a need for the sensor modules 66 and wireless network 74 to comply with appropriate standards, including RoHS, CE and EN 300 220 v2.1, FCC approvals.

In preferred embodiments, in which transmission occurs via a wireless network 74, the sensor modules 66 comprise a Semtech^{RTM} xe1205 transceiver, an Atmel^{RTM} AT86RF212 RF transceiver or similar device, and wireless transmission occurs at user-definable intervals, typically every 15-30 minutes. The network operates in the license-free 868 MHz band in Europe (915 MHz in the US). Transmitting at 868MHz is a compromise between improved range due to a lower frequency and yet avoiding 434MHz and associated interference from other wireless devices. Power consumption is also lower at 868MHz compared with 2.4GHz (WiFi frequency).

Furthermore, each module 66 will be provided with a full-featured protocol stack that supports mesh connectivity in a way that provides ultra low power 'multihop' communications. This combination of hardware and firmware should allow battery life of up to a few years for data collection applications. Additionally, a self healing mesh network improves the reliability of transmission and facilitates 'plug and play' integration. This "plug-and-play" mesh network enhances routing options to improve communication range and robustness.

The wireless network 74 may comprise a number of sensor modules 66 and a single base-station module 72. However, if the network 74 is required to cover larger distances, further, intermediate relay modules or routers (not shown) may be required located between the sensor modules 66 and the base-station module 72.

The base-station module 72 may perform one of two functions. In some embodiments, the base-station 72 will have integral Internet connectivity allowing the base-station 72 to upload the data directly to a remote server. In other embodiments the base-station 72 is not Internet enabled, and is instead connected, typically via a USB connection 76, to an Internet enabled computer (PC) 78, or web-enabled device or web server 80. In a preferred embodiment, the base-station module 72 includes a mini-B port to provide connectivity between the module 72 and the host PC 78 or web-server 80. As the necessary PC specifications are minimal, in a preferred embodiment, the computer is a single board computer (SBC) with WLAN (wireless local area network), RS232 and Ethernet connectivity. This provides both a cost-effective and reliable interface between the module network and the Internet.

As an alternative to the wireless network described hereinbefore, transmission of the data may occur over a WiFi network. An increasing number of sites have wireless local area networks (WLAN) available in their buildings. The use of a battery operated WLAN module will transmit data direct to the web without the need for a base-station or other interface. This has the advantage that the reduction in hardware components makes the monitoring system more cost-effective, however, the disadvantage is that in order to obtain acceptable battery life transmitting at a power-hungry 2.4GHz, transmission is limited to only a few seconds every 24 hours.

The data collected by the sensor modules 66 is sent via the Internet to a remote server 82. The remote server 82 transforms the data into costs, consumptions and emissions, as well as calculating a number of performance and comparative indicators. In a preferred embodiment, the calculations are performed using an 'active spreadsheet'. Active spreadsheets perform similar functions to ordinary spreadsheets, but take input data from field-based monitors. This data is then transformed into meaningful information using equations and routines built into the spreadsheet. The use of an active spreadsheet provides the flexibility of obtaining data from a number of different sources, and allows tailor-made comparative models to be set up depending on the particular application. It will be appreciated, however, that other means may be used to perform the calculations according to preset algorithms and equations.

It will be appreciated that the calculations may be performed by other programs written in one of a number of different computer languages, the program being able to retrieve and update data in a database.

The term database is used to include the equations used to calculate the optimal performance parameters based on the design/optimal criteria via the active spreadsheet.

The actual versus optimal and best in class comparison is provided by the present invention and enables the system to incorporate data from field based monitors into this process via the active spreadsheets and associated equations and routines.

In a preferred embodiment the data output from the spreadsheet is displayed on one or more web pages 84. The data is presented in the form of tables, graphs and other visual aids giving a clear and comprehensive presentation of utility use. Examples of some of the ways the data is displayed will now be discussed in more detail to illustrate how the application brings together logs of meters, sub-meters and temperature sensors and converts them into invaluable information presented in simple and straight forward ways. This data can be used to help a user boost profitability and minimize environmental impact in the premises or region of interest being monitored.

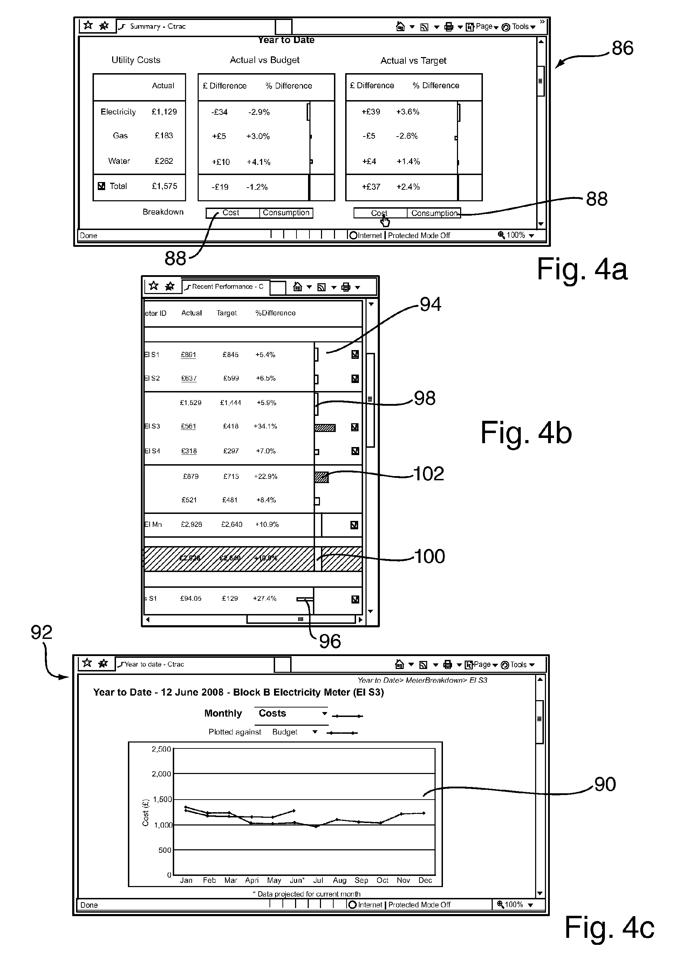

As shown in Figure 4a, a summary section 86 contains just enough information to summarize the site's use of utilities and contains links 88 to more detailed information displayed elsewhere on the website. More detailed information may be displayed in trend graphs 90, as shown in Figure 4c, showing consumption, cost or CO₂ over time. Year-to date information 92 is displayed in tables and graphs and relates to the current year (whether financial year or calendar year, etc.). The tables and graphs show actual costs, consumption and CO₂ emissions for all meters being monitored, compared to previous years and user defined budgets and targets. Previous yearly data may be stored and viewed in an archive section.

An overview section contains tables and charts relating to a rolling year, i.e. a period of one year which moves forward each day so it is always the last 365 days. This section contains comparisons and calculations which help a user to see the overall picture of improvements in energy performance in their site.

A user of the monitoring system may enter consumption or cost targets or budgets for each utility, device or region of interest. Differences between a meter or utility's cost, consumption or CO₂ and its budget or target can then be calculated by the remote server and the differences, typically in the form of a percentage difference can be displayed as a graphical image 94, as shown in Figure 4b. In a preferred embodiment, these images are in the form of coloured bars 94. The length of each bar shows how much difference there is between the actual amount (e.g. consumption, cost) and the budget or target. Furthermore, the direction of the bar, from an origin indicates whether the actual amount is less than or more than the budget or target.

The bars 94 may also be coloured to provide a more immediate visual indication of the comparative difference. For example, a green bar 96 may indicate when the actual amount is less than the budget or target, a yellow-green bar 98 may indicate that the actual amount is over the budget or target, but not enough to cause any concern, an amber bar 100 may indicate when the actual amount is over the budget or target by a moderately serious percentage and a red bar 102 may warn when the actual amount is over the budget or target by a serious percentage. In this case, it is desirable if the user can set the thresholds at which a bar would change from yellow-green to amber, and from amber to red.

Additionally, the width of the bar may show how large the budget or target for a particular meter or utility is compared to the total budget or target for the site or region of interest. Therefore, wider bars may be considered more important by a user as they represent a larger percentage of the overall budget. When combined with the colour indication described above, a narrow red bar shows that the excess costs or emissions (those which exceed the budget or target) are a high percentage of a small budget or target, while a wide red bar shows that the excess costs or emissions are a high percentage of a large budget or target, and therefore may be more significant.

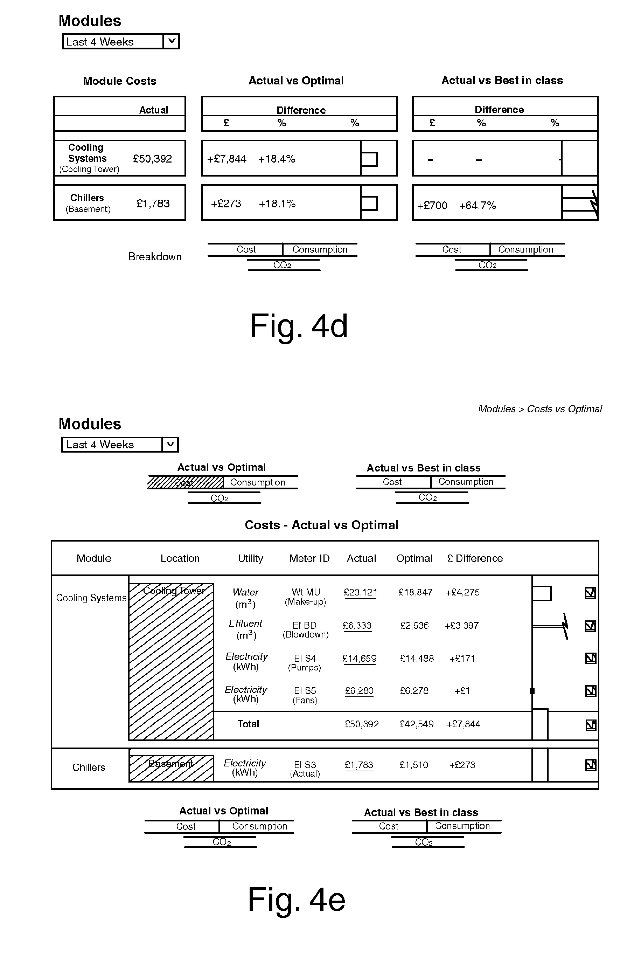

The graphical images or coloured bars may also be used to illustrate comparisons between actual and optimal consumption, as well as comparisons with Best-in-Class data, as shown in Figures 4d and 4e. The graphical images are typically displayed in addition to more accurate figures of cost or consumption, for example, and these are usually displayed in tabular form.

This means of displaying comparative information allows a user to quickly and easily see where potential cost, energy consumption or emissions savings may be made, and additionally, whether improving the efficiency of one device may lead to a greater saving than replacing a second, different device.

The remote server and spreadsheet may also be configured to produce benchmarking indicators, for example Normalised Performance Indicators (NPI). These allow comparisons of energy performances to be made with other similar buildings, with the data from other sites and facilities being accessible from a central database. Usually, these calculations are only undertaken periodically giving a basic 'snap shot' of performance. The advantage of the present monitoring system is that these NPI calculations may be performed online, allowing it to be updated on a daily basis. The NPI is an important indicator as it allows benchmarking between similar building types and functions, for example schools, hospitals libraries, etc. Other benchmark options are also available such as consumption per pupil or per patient etc. allowing accurate comparisons to be made.

The energy consumption monitoring system of the present invention therefore provides a low cost and integrated approach that allows a continuous appraisal of actual versus optimal efficiency of any resource-consuming system thereby highlighting when, where and how to boost profitability and minimise environmental impact.

The apparatus and method described hereinbefore utilises a network of sensor modules that provide a very flexible, generic approach that can be adapted to all systems and circumstances. The apparatus can therefore be used to monitor any system or device that consumes utilities or impacts on the efficiency of consumption, for example heating and cooling systems, air conditioning, lighting circuits, production machines, buildings, boilers, motors and heat exchangers.

Additionally, a web-based application that accesses logs from a monitored site, and transforms these logs into periodic consumption, CO₂ and financial data with relevant comparisons creates a user friendly and informative interface. The data may then be used to make informed decisions regarding cost-cutting and energy saving measures.

It will be appreciated that although the apparatus and method has been described as comprising a remote server and web-based access to the calculated performance data, the calculations of, for example, consumption, cost and performance indicators may also be performed in an on-site computer. That is, the data from the sensor modules is transmitted as described previously to a central processor or PC that performs the required calculations. The results may then be displayed on a suitable display device or screen. In this case, external reference values may be downloaded from a database via the Internet, obtained from a computer readable medium such as a CD or external hard drive or stored on the central PC.

This computer may take the place of the remote server, that is, it would receive the data about meter and sensor activity, it would store the environment data or would have access by some means to the environment data, and it would send the results to a suitable display device or screen for display.

## Claims

1. Device performance monitoring apparatus for monitoring the performance of a device comprising:
performance measuring means for measuring actual performance data of the device;
parameter measuring means for measuring parameters influencing the performance of the device;
transmitting means for transmitting data from the performance measuring means and the parameter measuring means to a processor;
wherein the processor calculates the actual performance of the device and compares the actual performance data to optimal performance data based on the data obtained from the parameter measuring means.

2. Apparatus according to Claim 1 in which the performance data comprises at least one of the fuel consumption of the device, the economic consumption (or cost) of the device, and the CO₂ emissions of the device.

3. Apparatus according to Claim 1 or Claim 2 in which the optimal performance data comprise the optimal performance data for the specific device operating in the specific environment.

4. Apparatus according to any preceding claim in which the parameter measuring means comprises load measuring means for measuring the load on the device.

5. Apparatus according to Claim 4 in which the load measuring means measures and records at least one of the production rate of the device and the heating and/or cooling requirements of the device.

6. Apparatus according to any preceding claim in which the apparatus comprises display means and the display means is arranged to display the actual performance characteristics of the device in comparison with at least one of:
- the optimal performance for the device;
- the performance of the same device under design conditions;
- the device operating with different parameters; and
- the performance characteristics of a second device, wherein the performance of the second device is optionally calculated from a database using the data recorded from the parameter measuring means, or optionally the second device is a best in class device.

7. Apparatus according to Claims 6 in which the display means displays and compares at least one of cost data and CO₂ emission data.

8. Apparatus according to any preceding claim in which the parameter measuring means measures environmental factors which influence the performance of the device.

9. Apparatus according to any preceding claim in which the performance measuring means measures at least one of the actual energy consumption of the device, the actual electrical consumption of the device, the fuel consumption of the device, and the effluent produced by the device.

10. Apparatus according to any preceding claim in which the parameter measuring means comprises at least one sensor.

11. Apparatus according to Claim 10 in which the parameter measuring means comprises at least one of an environmental sensor, a temperature sensor which senses and records the temperature of the environment around the device, and a sensor to sense the configuration of an enclosure in which the device is located.

12. Apparatus according to any preceding claim in which the device comprises a utility consumption device.

13. A device performance monitoring method for monitoring the performance of a device comprising:
measuring and recording data for the actual performance of the device;
measuring and recording parameter data influencing the performance of the device;
transmitting data from parameter measuring means and performance measuring means to a processor;
comparing the actual performance data of the device to optimal performance data.

14. A method according to Claim 18 in which the parameter data influencing the performance of the device includes at least one of load parameters, environmental parameters, and building or process parameters.

15. A method according to Claim 18 or Claim 19 in which the method comprises measuring operating profile parameters of the device.
